# EUROPÄISCHE PATENTSCHRIFT

(11) **EP 3 294 190 B1**
(45) Veröffentlichungstag und Bekanntmachung des Hinweises auf die Patenterteilung: **24.06.2020**
(21) Anmeldenummer: 16720150.8
(22) Anmeldetag: 04.05.2016
(51) Int. Cl.: A61C 13/265, A61C 5/30

(54) **FRIKTIONSELEMENT**
FRICTION ELEMENT
ÉLÉMENT À FRICTION

(30) Priorität: 12.05.2015 DE 102015006146
(43) Veröffentlichungstag der Anmeldung: 21.03.2018
(73) Patentinhaber: Jehle, Thomas, 6500 Landeck (AT); Siegele, Otmar, 6555 Kappl (AT)
(72) Erfinder: Jehle, Thomas, 6500 Landeck (AT); Siegele, Otmar, 6555 Kappl (AT)
(74) Vertreter: Kador & Partner PartG mbB
(86) Internationale Anmeldenummer: PCT/EP2016/060018
(87) Internationale Veröffentlichungsnummer: WO 2016/180706

(56) Entgegenhaltungen:
- EP-A1- 2 862 542
- EP-A1- 2 865 353
- EP-A2- 2 489 326
- CH-A5- 670 563
- DE-A1-102011 081 214
- US-A- 5 413 480

## Beschreibung

Die Erfindung betrifft ein Friktionselement zur Fixierung von Zahnprothesen auf Implantathalteelementen oder Wurzelkappen sowie ein Kit bestehend aus dem Friktionselement und einem Werkzeug zum Öffnen der Verbindung Friktionselement - Zahnprothese.

### Stand der Technik

Unter anderen Ausführungsformen setzt sich Zahnersatz für vollständig fehlende oder zu ersetzende Zähne aus einem Zahnimplantatsystem, welches ein Implantat und optionale Aufbauteile beinhaltet, und einer Zahnprothese zusammen. Dabei übernimmt das Zahnimplantat die Funktion der Zahnwurzel und die Zahnprothese die der Kaufläche des Zahns. Implantate können alle erdenklichen Formen besitzen. In der Praxis haben sich aber konische und zylindrische Implantate durchgesetzt. Dabei unterscheiden sich diese Implantate vorzugsweise in ihrer Konizität und ihrem Außengewinde, wie z.B. im Fall der *CAMLOG*® *SCREW-LINE* Implantate, der *CAMLOG*® *ROOT-LINE* Implantate und in der Reihe der *Strauman SLA*® und *SLActive*® Implantate.

Allgemein wird zwischen festsitzendem und herausnehmbarem Zahnersatz unterschieden. Der Stabilität und problematischen Reinigungsmöglichkeiten des festsitzenden Zahnersatzes stehen die hervorragenden Reinigungsmöglichkeiten und die schlechte Stabilität des herausnehmbaren Zahnersatzes entgegen. Beide Eigenschaften können positiv verbunden werden, indem kombinierter Zahnersatz zum Einsatz gebracht wird. Ein solcher kombinierter Zahnersatz besteht aus einer Zahnprothese, welche über einen Steckverbindungsmechanismus auf das im Kiefer fixierte Zahnimplantat montiert wird. Im Stand der Technik etablierte Steckmechanismen sind z.B. das Kugelkopfverbindungselement, Steckbrückensysteme oder Patrizen-Matrizen-Steckverbindungssysteme wie das Locator-System (US 2004/0005530; US6 299 447; US6 030 219) oder das besonders vorteilhafte Yantaloc System (WO2014090358). Das Dokument CH 670 563 A5 offenbart ein Kupplungssystem zur lösbaren Verbindung von Prothesenteilen mit Zahnwurzeln oder Implantaten, wobei es aus zwei Kupplungshälften besteht, von denen eine aus Kunststoff geformt und mit dem Prothesenteil verbindbar ist und als Matrize zur Aufnahme der Ankerkugel einer, die Patrize darstellenden, in einer Zahnwurzel oder einem Implantat einschraubbaren Metallschraube ausgebildet ist.

Die Verbindung dieser Systeme mit der Zahnprothese erfolgt über ein Friktionselement, das aus einem Friktionseinsatz und einer Kappe besteht. Häufig wird ein solches Friktionselement, d.h. die Kombination aus Friktionseinsatz und Kappe als Matrizensystem bezeichnet. Verschiedene kommerzielle Produkte wie das Noaloc™ sind bekannt. Der Friktionseinsatz ist ein oben geschlossenes Verschleißteil aus elastischem Polymer mit einer auf der offenen Seite eingearbeiteten Matrize oder Patrize, wobei die komplementäre Freiform beispielsweise mit der Kugelkopfverbindung, dem Locator-System oder dem Yantaloc-System im Eingriff steht. Auf der mit der Kappe abgedeckten Seite des Friktionseinsatzes ist die Zahnprothese dauerhaft an der Kappe fixiert. Es besteht also eine völlig feste Verbindung Kappe - Zahnprothese. Die Kappe besteht üblicherweise aus Titan, aus einer Titanlegierung, aus einer Keramik wie Zirkonoxid oder auch aus Polyetheretherketon (PEEK) also allesamt Materialien mit sehr hohem Schmelzpunkt. Die dauerhafte Befestigung der Kappe in der Zahnprothese erfolgt durch Einpolymerisation derselben in der Zahnprothese.

Wenn nun aus medizinischen Gründen ein Ausbau des Friktionselements aus der Zahnprothese erfolgen muss, ist die Verwendung eines Hochtemperatur-Extraktors notwendig. Mit einer solchen Vorrichtung wird das Polymer in der Nähe der Kappe zum Schmelzen gebracht. Nachteilig dabei ist, dass durch die Hochtemperaturextraktion Schädigungen nicht auszuschließen sind. Der Arbeitsaufwand ist außerdem beträchtlich. Ferner kommt durch den gesamten Aufbau aus Friktionseinsatz und Kappe eine erhebliche Aufbauhöhe zustande. Als weitere Möglichkeit bleibt noch das Ausbohren des Friktionselements mit geeigneten Bohrmitteln. Auch diese Möglichkeit hat den Nachteil, dass sowohl Schädigungen nicht auszuschließen sind als auch der Arbeitsaufwand erheblich ist.

Aufgabe der Erfindung ist die Bereitstellung eines Friktionselements, welches lösbar in der Zahnprothese verankert werden kann, niedrige Aufbauhöhen und eine kostengünstige Patientenversorgung ermöglicht. Die Erfindung beruht auf der Erkenntnis dass diese Aufgabe mittels eines einteiligem Friktionselement zur Fixierung von Zahnprothesen erreicht werden kann, welches auf der Außenseite ein Außengewinde aufweist.

Die Erfindung stellt bereit ein:
Friktionselement (1) zur Fixierung von implantatverankerten, herausnehmbaren Zahnprothesen auf Implantathalteelementen oder Wurzelkappen, wobei das Friktionselement einteilig ist, ein Außengewinde (2) und eine zentrale Ausnehmung (3) zur Aufnahme eines Implantathalteelements oder einer Wurzelkappe aufweist, wobei das Friktionselement mindestens einen Federspalt (6) aufweist, wobei der Federspalt eine Ausnehmung ist, welche den Mantel des Friktionselements in eine äußere Lippe (7) und eine innere Lippe (4) teilt, wobei die innere Lippe (4) am Implantathalteelement oder der Wurzelkappe zumindest teilweise anliegen wird und die äußere Lippe (7) das Außengewinde (2) aufweist, um mit der Zahnprothese im Eingriff zu stehen.

Als Zahnersatz bezeichnet man alle künstlichen Bestandteile, die die Wiederherstellung von verlorenen, natürlichen Zahnfunktionen gewährleisten. Neben festsitzendem und herausnehmbarem Zahnersatz gibt es kombinierten Zahnersatz. Kombinierter Zahnersatz setzt sich aus einem Implantatsystem sowie einer fixierbaren Zahnprothese zusammen. Dabei wird das fixierbare Bauteil auf dem im Kiefer fixierten Bauteil durch einen Verbindungsmechanismus abnehmbar montiert.

Einteilig im Sinn der vorliegenden Erfindung bedeutet, dass das Friktionselement nicht zerstörungsfrei in zwei Gegenstände zerlegt werden kann.

Das obere Ende von allen beschriebenen Teilen beschreibt immer das Ende, welches sich näher an der befestigten Zahnprothese bzw. näher an der Aufnahme für die Zahnprothese befindet.

Das untere Ende von allen beschriebenen Teilen beschreibt immer das Ende, welches sich näher an dem Implantat befindet.

Als breiteste Stelle wird die Stelle bezeichnet, an der der effektive Durchmesser am größten ist. Bei zylindrischer Form entspricht der effektive Durchmesser dem Durchmesser. Im Falle von nicht kreisförmiger Querschnittsfläche ist der effektive Durchmesser derjenige, welcher dem Durchmesser einer kreisförmigen Querschnittsfläche mit gleicher Fläche entspricht.

Das Außengewinde (2) kann jede erdenkliche Form annehmen. Aus Gründen der Aufbauhöhe ist nur ein einziger Gewindegang vorteilhaft. Falls die Aufbauhöhe weniger wichtig ist, können auch zwei oder mehr Gewindegänge vorgesehen werden.

Die zentrale Ausnehmung (3) zur Aufnahme eines Implantathalteelements oder einer Wurzelkappe befindet sich auf der Unterseite des Implantathalteelements. Ferner ist die Form der zentralen Ausnehmung (3) bevorzugt an das Implantathalteelement oder die Wurzelkappe angepasst. Ist beispielsweise das Implantathalteelement ein Kugelkopf, so wird die Ausnehmung ebenfalls in Ihrer Grundform im Wesentlichen dieser Form folgen. Da die Verbindung lösbar sein soll und die Elastizität des Friktionselements begrenzt ist, wird die Ausnehmung bevorzugt so gestaltet, dass sie das Implantathalteelement bis über die Stelle mit dem größten Querschnitt hinaus umfasst. Dies bedeutet, dass die Trennung von Friktionselement und Implantathalteelement eine leichte Verformung des Friktionselements bedingt. Die zentrale Ausnehmung (3) ergibt sich durch die innere Lippe (4) und die Bodenfläche (5) des Friktionselements. Die Bodenfläche (5) ist nicht notwendigerweise von der inneren Lippe (4) abgegrenzt sondern kann direkt in diese übergehen. Wenn die innere Lippe direkt in die Bodenfläche übergeht, gilt als Bodenfläche (5) die Fläche, welche in der Aufsicht nicht von der inneren Lippe (5) überdeckt wird.

Die äußere Grundform des Friktionselements ist bevorzugt entweder zylindrisch, konusförmig oder auch eine Kombination daraus. Die äußere Grundform des Friktionselements ist besonders bevorzugt konusförmig, d.h. weist Kegelstumpfform auf. Dabei ist die Deckfläche oben, d.h. zur Zahnprothese hin orientiert und die Grundfläche unten, d.h. zum Implantathalteelement oder zur Wurzelkappe hin orientiert. Die Konusform kann auch nur in einem Teilbereich des Friktionselements vorliegen.

Der Außendurchmesser der Grundform des Friktionselements ist bevorzugt 1.5 bis 10 mm, mehr bevorzugt 4.0 bis 8.0 mm, noch mehr bevorzugt 5.0 bis 7.0 mm und am meisten bevorzugt 5.2 bis 6.0 mm. Im Falle einer zylindrischen Grundform entspricht der Außendurchmesser dem Durchmesser des Zylinders. Im Falle einer Kegelstumpfform entspricht der hier angegebene Durchmesser dem Durchmesser der Grundfläche des Kegelstumpfes.

Das Friktionselement gemäß der vorliegenden Erfindung weist mindestens einen Federspalt (6) auf. Ein Federspalt ist eine Ausnehmung, welche den Mantel des Friktionselements in eine äußere Lippe (7) und eine innere Lippe (4) teilt. Die innere Lippe (4) liegt am Implantathalteelement oder der Wurzelkappe zumindest teilweise an. Die äußere Lippe (7) weist das Außengewinde (2) auf und kann insofern mit der Zahnprothese im Eingriff stehen. Üblicherweise und bevorzugt gibt es genau einen umlaufenden Federspalt. Umlaufend bedeutet, dass bezogen auf den Grundköper Zylinder oder Kegelstumpf der Federspalt radial keine Unterschiede aufweist. Je nach Form des Implantathalteelements ist es aber auch möglich einen oder mehrere Federspalte vorzusehen, die nur in Teilbereichen angeordnet sind.

Der Federspalt (6) weist eine Tiefe T auf. Als Tiefe T wird die größte Distanz der äußeren Tangentialebene der inneren und äußeren Lippen bis zur entsprechenden inneren Tangentialebene der inneren und äußeren Lippe bezeichnet. Die äußere Tangentialebene liegt definitionsgemäß unten und die innere Tangentialebene oben, d.h. zur Zahnprothese hin orientiert. Die Tiefe T beträgt bevorzugt 0.5 bis 4.0 mm, stärker bevorzugt 0.7 bis 2.0 mm und am meisten bevorzugt 0.8 bis 1.5 mm.

Der Federspalt (6) wird bevorzugt so angeordnet, dass die äußere Lippe (7) und innere Lippe (4) über die Ebene des größten Querschnitts des Implantathalteelementes bzw. der Wurzelkappe geschoben werden können und anschließend ein fester Sitz erreicht wird. Besonders vorteilhaft ist es, wenn der Federspaltes in Richtung der Zahnprothese bis über die Ebene hinausreicht, an welcher das Implantathalteelement den größten Querschnitt aufweist.

Um das Überstülpen zu erleichtern, ist es möglich die innere Lippe (4) mit einem oder mehreren Spalt(en) (10) zu versehen. Der oder die Spalt(e) (10) ermöglichen ein Zurückweichen der inneren Lippe(4) beim Überstülpen über das Implantathalteelement bzw. die Wurzelkappe über das Maß hinaus, das auf Basis der Elastizität des Materials möglich ist.

Bevorzugt wird die zentrale Ausnehmung (3) zur Aufnahme des Implantathalteelements oder der Wurzelkappe auf das Implantathalteelement oder die Wurzelkappe abgestimmt. Abgestimmt bedeutet, dass die inneren Lippe (4), die Bodenfläche(5), also diejenigen Flächen welche die zentrale Ausnehmung (3) bilden auf das spezifische Implantathalteelement oder die spezifische Wurzelkappe abgestimmt ist und zwar so. dass die gewünschte Kraft für das Entfernen erreicht wird. Es versteht sich von selbst, dass verschiedene Materialien und Materialkombinationen zu unterschiedlichen Kräften führen.

Bevorzugt steht die innere Lippe (4) das erfindungsgemäßen Friktionselements mit einer Ausnehmung des Implantathalteelements im Eingriff. In diesem Fall muss nicht notwendigerweise eine äußere Lippe vorhanden sein. Mit anderen Worten es ist nicht unbedingt erforderlich, dass ein Federspalt vorhanden ist. Ein Aufbau mit Federspalt und insofern innerer und äußerer Lippe ermöglicht aber höhere Festigkeit.

In einer bevorzugten Ausführungsform ist das Friktionselement so geformt, dass Kugeln mit einem Durchmesser von 1.0 bis 5.0 mm, bevorzugt mit einem Durchmesser von 1.5 mm bis 3.0 mm umschlossen werden können. In dieser Ausführungsform sind die inneren und äußeren Lippen ferner bevorzugt so geformt, dass sie die Kugel zu mindestens 70 vol.-%; bevorzugt mindestens 80 vol.-% umschließen.

In einer weiteren bevorzugten Ausführungsform ist das Friktionselement so geformt, dass ein Locator Element fest umschlossen wird. Wesentlich dabei ist, dass die inneren Lippen in die umlaufende Ausnehmung eingreifen.

In einer dritten bevorzugten Ausführungsform Ausführungsform ist das Friktionselement so geformt, dass ein Yantaloc Element fest umschlossen wird. Wesentlich dabei ist, dass die inneren Lippen in die umlaufende Ausnehmung eingreifen.

Das Friktionselement gemäß der vorliegenden Erfindung weist bevorzugt mindestens eine Werkzeugausnehmung (8) für den Eingriff eines Entnahmewerkzeugs auf. Es ist besonders bevorzugt diese Werkzeugausnehmung (8) in der Bodenfläche (5) und/oder in der inneren Lippe (4) vorzusehen. Bevorzugt sind 3 bis 10, besonders bevorzugt 4 bis 8 Werkzeugausnehmungen (8) für den Eingriff eines Entnahmewerkzeugs (12).

Ferner ist es möglich in der Bodenfläche (5) eine Positionierungsausnehmung (11) vorzusehen. Diese ermöglicht die zielgerichtete Einführung des Entnahmewerkzeugs (12). Die Geometrie einer solchen Positionierungsausnehmung (11) ist variabel. Beispielsweise kann die Bodenfläche (5) eine ringförmige Ausnehmung mit V-Form im Schnitt aufweisen.

Das erfindungsgemäße Friktionselement besteht bevorzugt aus einem Elastomer wie beispielsweise Polyether oder Silikone. Besonders bevorzugt ist Polyetheretherketon (PEEK) und insbesondere solche Polyetheretherketone, die für medizinische Zwecke vorgesehen sind.

Die vorliegende Erfindung stellt ferner ein Kit (9) mit einem Friktionselement wie oben beschrieben und einem Entnahmewerkzeug (12) bereit. Ein solches Kit ermöglicht die einfache und arbeitszeitsparende Entfernung einer Zahnprothese.

In einer bevorzugten Ausführungsform des Kits besitzt das Entnahmewerkzeug einen zylindrischen Grundkörper, an dessen einen Ende sternförmig Quader längs der Hauptachse des Grundkörpers angeordnet sind, welche über das Ende des Grundkörpers hinausgehen und welche in die Aussparungen des Friktionselements passen

### Figurenbeschreibung

- Fig. 1:: Ansicht der Außenseite eines Friktionselement (1) mit Gewindegang
- Fig. 2:: Aufsicht durch ein Friktionselement (1) mit Ausnehmungen für ein Entnahmewerkzeug (12)
- Fig. 3:: Schnitt eines Friktionselements (1) mit Entnahmewerkzeug (12) im Eingriff
- Fig. 4:: Schnitt eines Friktionselements (1) auf einem Kugelanker
- Fig. 5:: Schnitt eines Friktionselements (1) auf einem Locator
- Fig. 6:: Schnitt eines Friktionselements (1) auf einem YantaLoc
- Fig. 7:: Perspektivische Darstellung eines Friktionselements
- Fig. 8:: Perspektivische Darstellung eines Entnahmewerkzeugs und eines Friktionselements
- Fig. 9:: Perspektivische Dreifachansicht eines Friktionselements sowie eines Entnahmewerkzeugs

### Liste der Bezugszeichen

- 1: Friktionselement
- 2: Außengewinde
- 3: zentrale Ausnehmung
- 4: innere Lippe
- 5: Bodenfläche
- 6: Federspalt
- 7: äußere Lippe
- 8: Werkzeugausnehmung
- 9: Kit
- 10: Spalt
- 11: Positionierungsausnehmung
- 12: Entnahmewerkzeug

### Ausführungsformen der Erfindung

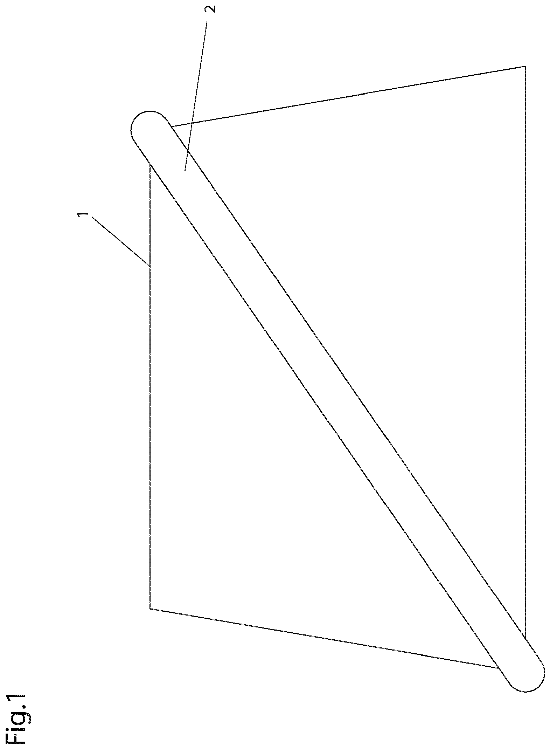

Figur 1 zeigt eine Seitenansicht eines erfindungsgemäßen Friktionselements mit einem Außengewinde. Das Außengewinde weist nur einen Gewindegang auf. Die Grundform des Friktionselements ist konusförmig.

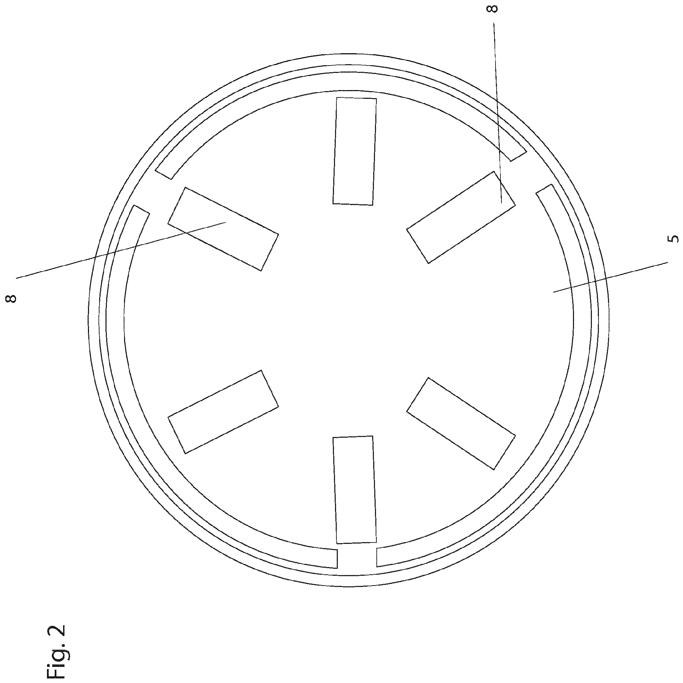

Figur 2 zeigt einen Schnitt durch die Bodenfläche eines erfindungsgemäßen Friktionselements. In der Bodenfläche sind 6 Werkzeugausnehmungen (8) vorhanden.

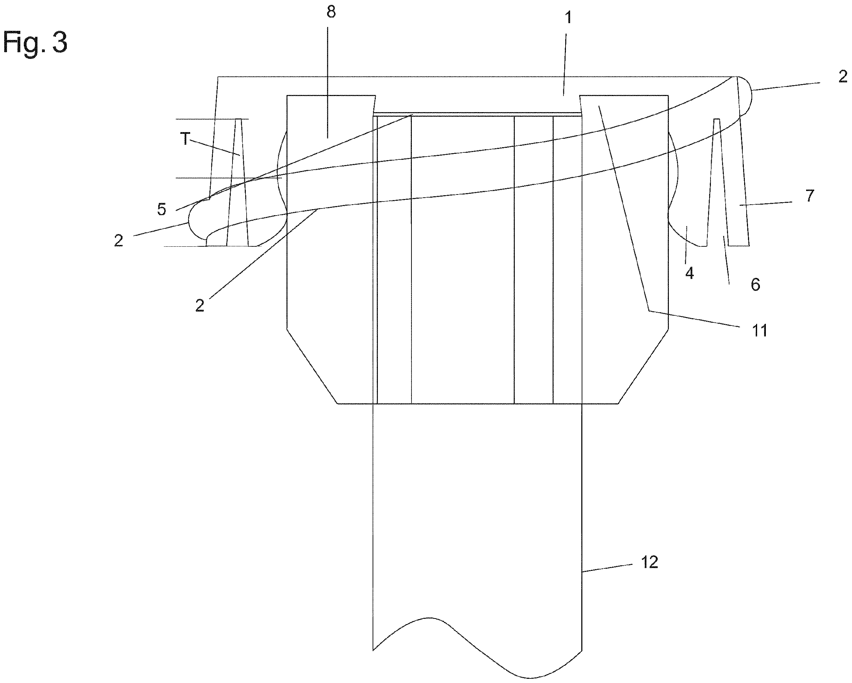

Figur 3 zeigt einen Schnitt durch ein erfindungsgemäßes Friktionselement mit Entnahmewerkzeug (12) im Eingriff. Das Außengewinde (2) mit nur einem Gewindegang ist strichliert angedeutet. Erkennbar sind ferner die äußere Lippe (7), der Federspalt (6) und die innere Lippe (4). Das Entnahmewerkzeug (12) liegt auf der Bodenfläche (5) auf. Ferner weist die Bodenfläche (5) zwei Werkzeugausnehmungen (8) auf.

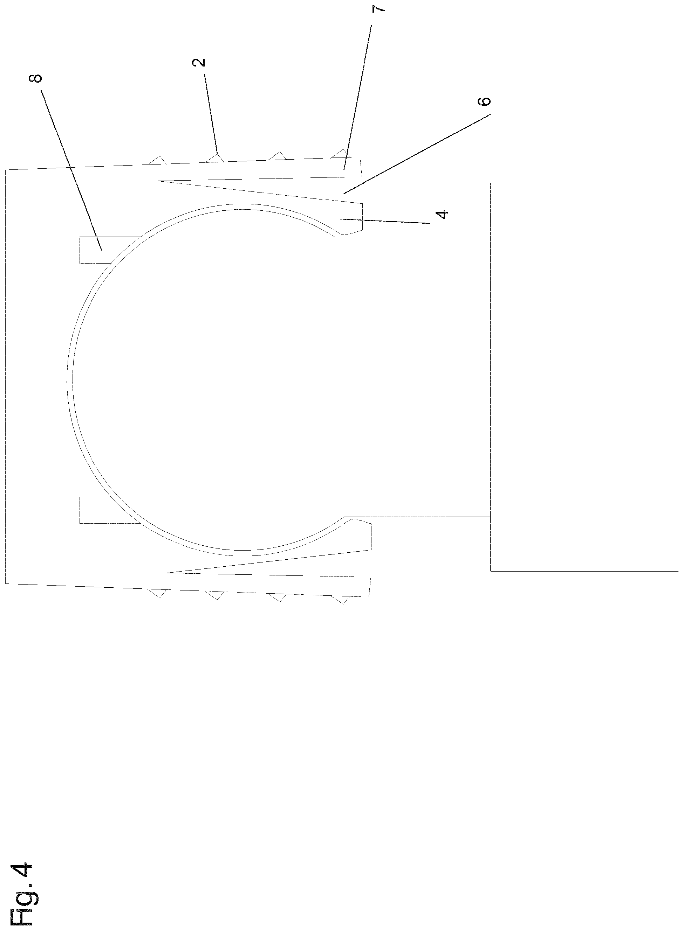

Figur 4 zeigt einen Schnitt durch ein erfindungsgemäßes Friktionselement auf einem Kugelanker. Das Außengewinde (2) weist hier 4 Gewindegänge auf. Erkennbar sind ferner die äußere Lippe (7), der Federspalt (6) und die innere Lippe (4) sowie zwei Werkzeugausnehmungen (8) in der Bodenfläche bzw. der angrenzenden inneren Lippe (4). In dieser Ausführungsform ist ferner erkennbar, dass der Federspalt in Richtung der Zahnprothese bis über die Ebene hinausreicht, an welcher der Kugelanker den größten Querschnitt aufweist.

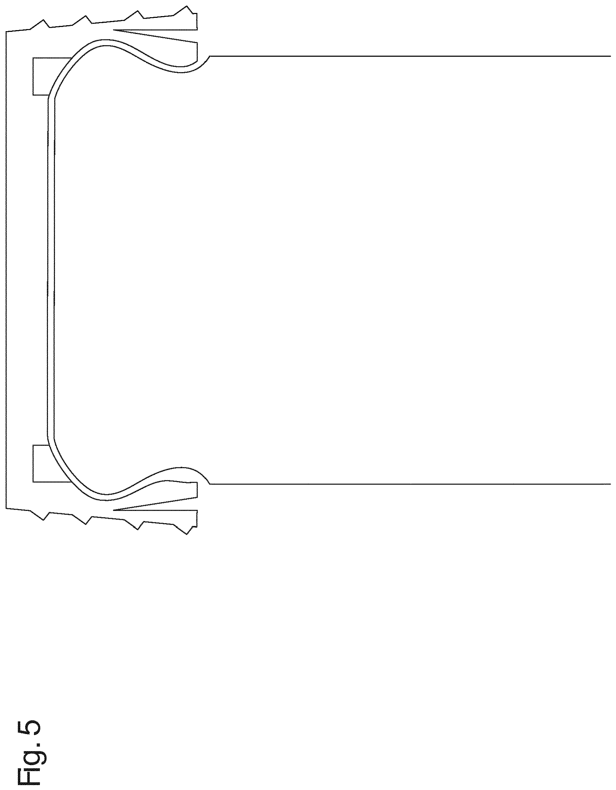

Figur 5 zeigt einen Schnitt durch ein erfindungsgemäßes Friktionselement auf einem Locator. Es ist erkennbar, dass die innere Lippe in die umlaufende Ausnehmung eingreift.

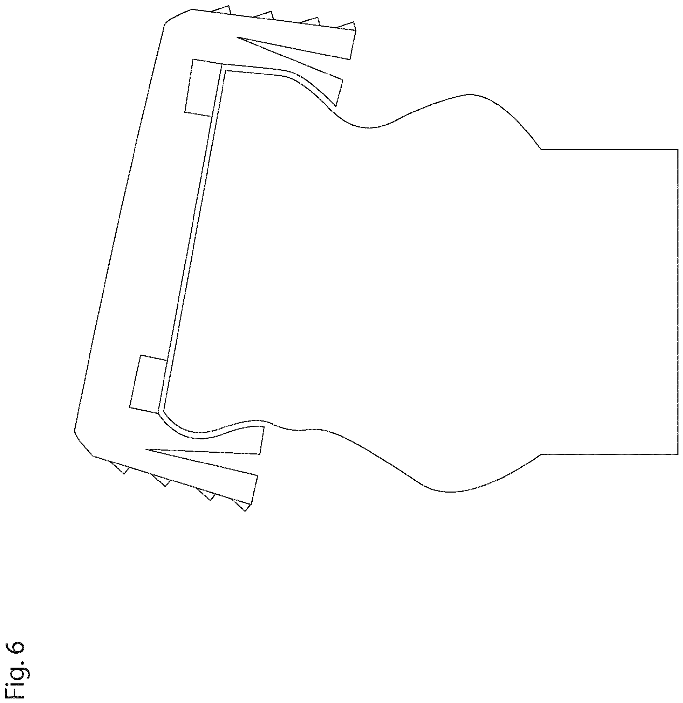

Figur 6 zeigt einen Schnitt durch ein erfindungsgemäßes Friktionselement auf einem Yantaloc. Die innere Lippe greift in die umlaufende Ausnehmung ein und ermöglicht so einen festen Sitz.

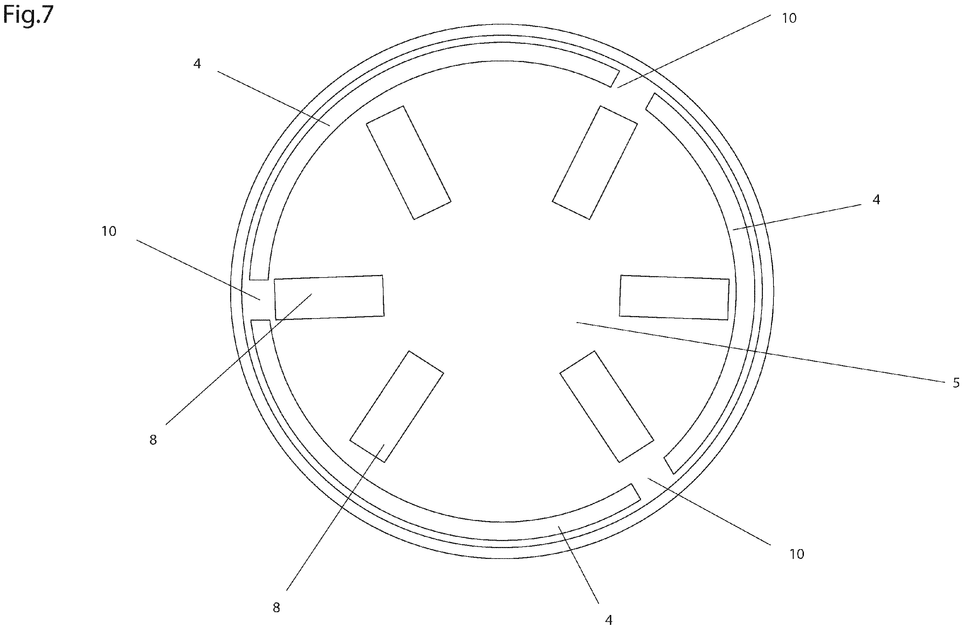

Figur 7 ist die Ansicht auf ein erfindungsgemäßes Friktionselement. Die Bodenfläche (5) weist 6 Werkzeugausnehmungen (8) auf. Ferner sind in der inneren Lippe (4) drei Spalte (10) vorgesehen.

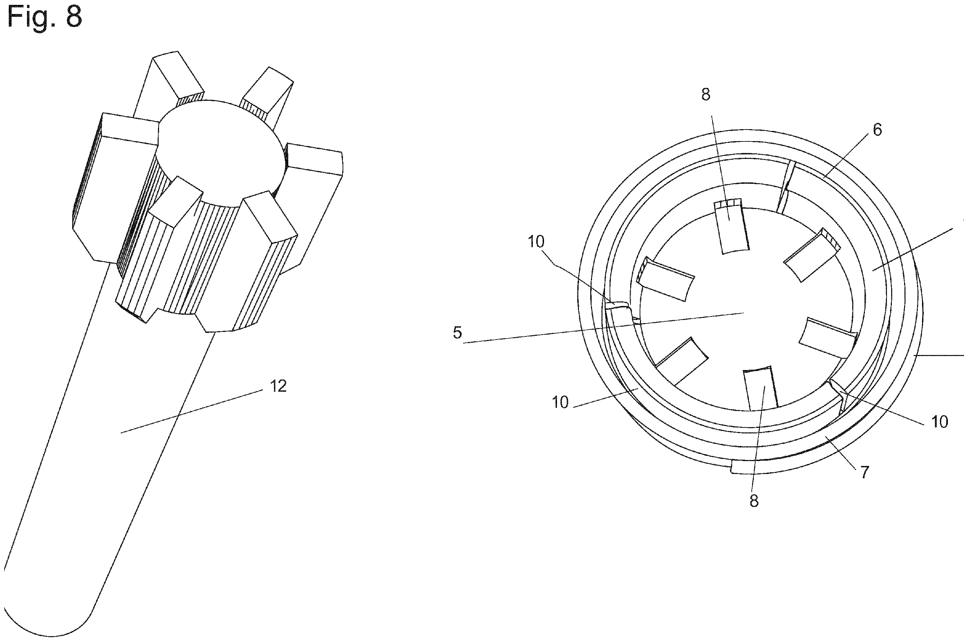

Figur 8 zeigt ein Entnahmewerkzeug für ein Friktionselement sowie ein Friktionselement, welches geeignet ist, um mit dem Entnahmewerkzeug entnommen zu werden. Dabei greifen die Quader, welche entlang des zylindrischen Grundkörpers des Entnahmewerkzeugs laufen, in entsprechend geformte Aussparungen in dem Friktionselement.

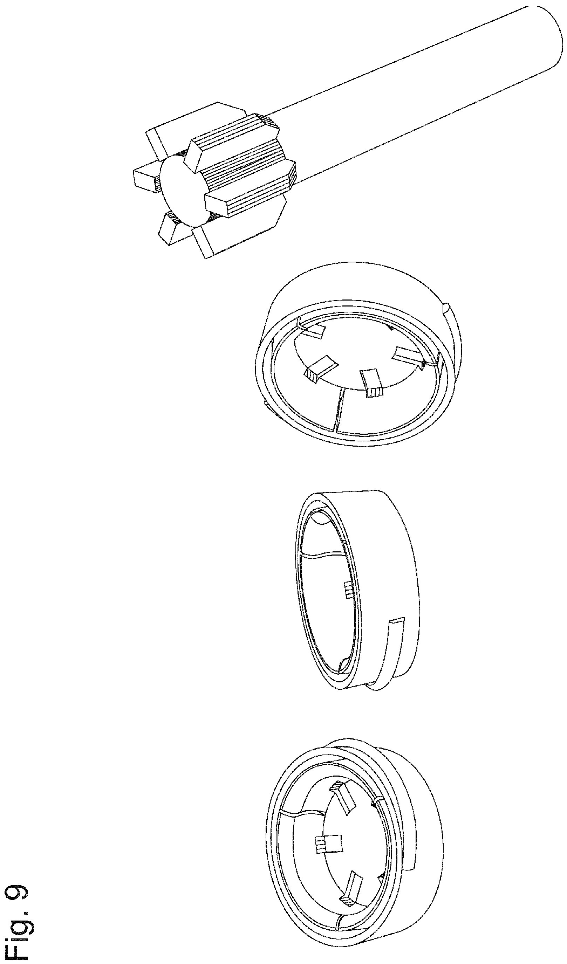

Figur 9 zeigt eine dreifache Ansicht eines Friktionselements mit Aussparungen für ein Entnahmewerkzeug sowie das Entnahmewerkzeug. Das Friktionselement weist zudem ein Außengewinde auf.

## Patentansprüche

1. Friktionselement (1) zur Fixierung von implantatverankerten, herausnehmbaren Zahnprothesen auf Implantathalteelementen oder Wurzelkappen, wobei das Friktionselement einteilig ist, ein Außengewinde (2) und eine zentrale Ausnehmung (3) zur Aufnahme eines Implantathalteelements oder einer Wurzelkappe aufweist, wobei das Friktionselement mindestens einen Federspalt (6) aufweist, wobei der Federspalt eine Ausnehmung ist, welche den Mantel des Friktionselements in eine äußere Lippe (7) und eine innere Lippe (4) teilt, wobei die innere Lippe (4) am Implantathalteelement oder der Wurzelkappe zumindest teilweise anliegen wird und die äußere Lippe (7) das Außengewinde (2) aufweist, um mit der Zahlprothese im Eingriff zu stehen.

2. Friktionselement gemäß Anspruch 1 mit genau einem umlaufenden Federspalt (6).

3. Friktionselement nach einem der voranstehenden Ansprüche, wobei der mindestens eine Federspalt (6) in Richtung der Zahnprothese bis über die Ebene hinausreicht, an welcher ein aufgenommenes Implantathalteelement den größten Querschnitt aufweist.

4. Friktionselement nach einem der voranstehenden Ansprüche, wobei der Federspalt (6) durch eine innere Lippe (4) und eine äußere Lippe (7) gebildet wird.

5. Friktionselement nach einem der voranstehenden Ansprüche, wobei die zentrale Ausnehmung (11) zur Aufnahme eines Implantathalteelements oder einer Wurzelkappe auf das Implantathalteelement oder die Wurzelkappe abgestimmt ist.

6. Friktionselement nach Anspruch 5, wobei die innere Lippe (4) mit einer Ausnehmung des Implantathalteelements im Eingriff steht.

7. Friktionselement nach Anspruch 5 oder 6, wobei die innere Lippe (4) zur Aufnahme des Implantathalteelements oder der Wurzelkappe auf das Implantathalteelement oder die Wurzelkappe abgestimmt ist.

8. Friktionselement nach einem der voranstehenden Ansprüche, wobei die zentrale Ausnehmung (11) mindestens eine Werkzeugausnehmung (8) für den Eingriff eines Entnahmewerkzeugs aufweist.

9. Friktionselement nach einem der voranstehenden Ansprüche, wobei der Federspalt (6) eine Tiefe T von 0,5 bis 4,0 mm, bevorzugt 0,7 bis 2,0 mm und am meisten bevorzugt 0,8 bis 1,5 mm aufweist, wobei als Tiefe T die größte Distanz der äußeren Tangentialebene der inneren und äußeren Lippen bis zur entsprechenden inneren Tangentialebene der inneren und äußeren Lippe bezeichnet wird und wobei die äußere Tangentialebene definitionsgemäß unten, d.h. von der Zahnprothese weg orientiert, und die innere Tangentialebene oben, d.h. zur Zahnprothese hin orientiert, liegt.

10. Kit mit einem Friktionselement gemäß einem der Ansprüche 1 bis 9 und einem Entnahmewerkzeug (12).

## Claims

1. Friction element (1) for fixing implant-anchored, removable dental prostheses on implant-holding elements or root caps, wherein the friction element is in one piece, has an external thread (2) and a central recess (3) for receiving an implant holding element or a root cap, wherein the friction element has at least one spring gap (6), wherein the spring gap is a recess which divides the casing of the friction element into an outer lip (7) and an inner lip (4), wherein the inner lip (4) will lie at least partially against the implant-holding element or the root cap and the outer lip (7) has the external thread (2) to be in engagement with the dental prosthesis.

2. Friction element according to claim 1 having exactly one circumferential spring gap (6).

3. Friction element according to any of the preceding claims, wherein the at least one spring gap (6) extends in the direction of the dental prosthesis beyond the plane at which a received implant-holding element has the largest cross section.

4. Friction element according to any of the preceding claims, wherein the spring gap (6) is formed by an inner lip (4) and an outer lip (7).

5. Friction element according to any of the preceding claims, wherein the central recess (11) is adapted to the implant-holding element or the root cap for receiving the implant-holding element or the root cap.

6. Friction element according to claim 5, wherein the inner lip (4) is in engagement with a recess of the implant-holding element.

7. Friction element according to claim 5 or 6, wherein the inner lip (4) is adapted to the implant-holding element or the root cap for receiving the implant-holding element or the root cap.

8. Friction element according to any of the preceding claims, wherein the central recess (11) has at least one tool recess (8) for the engagement of a removal tool.

9. Friction element according to any of the preceding claims, wherein the spring gap (6) has a depth T of 0.5 to 4.0 mm, preferably 0.7 to 2.0 mm and most preferably 0.8 to 1.5 mm, wherein as depth T the largest distance from the outer tangent plane of the inner and outer lips to the corresponding inner tangent plane of the inner and outer lips is designated and wherein, by definition, the outer tangent plane lies at the bottom, i.e. oriented away from the dental prosthesis, and the inner tangent plane lies at the top, i.e. oriented toward the dental prosthesis.

10. Kit having a friction element according to any of claims 1 to 9 and a removal tool (12).

## Revendications

1. Élément de friction (1) pour la fixation de prothèses dentaires amovibles ancrées dans un implant, sur des éléments de maintien d'implants ou des coiffes radiculaires, dans lequel l'élément friction est constitué d'une seule pièce, un filetage extérieur (2) et un évidement central (3) pour le logement d'un élément de maintien d'implant ou d'une coiffe radiculaire, dans lequel l'élément de friction comprend au moins une fente élastique (6), dans lequel la fente élastique est un évidement qui divise l'enveloppe externe de l'élément de friction en une lèvre externe (7) et une lèvre interne (4), dans lequel la lèvre interne (4) s'appuie au moins partiellement contre l'élément de maintien d'implant ou la coiffe radiculaire et la lèvre externe (7) comprend le filetage extérieur (2) afin d'être emboîtée avec la prothèse dentaire.

2. Élément de friction selon la revendication 1, avec exactement une fente élastique (6) circulaire.

3. Élément de friction selon l'une des revendications précédentes, dans lequel l'au moins une fente élastique (6) s'étend en direction de la prothèse dentaire jusqu'au-dessus du plan, au niveau duquel un élément de maintien d'implant logé présente la section la plus grande.

4. Élément de friction selon l'une des revendications précédentes, dans lequel la fente élastique (6) est constituée d'une lèvre interne (4) et d'une lèvre externe (7).

5. Élément de friction selon l'une des revendications précédentes, dans lequel l'évidement central (11) est adapté, pour le logement d'un élément de maintien d'implant ou d'une coiffe radiculaire, à l'élément de maintien d'implant ou à la coiffe radiculaire.

6. Élément de friction selon la revendication 5, dans lequel la lèvre interne (4) est emboîtée avec un évidement de l'élément de maintien d'implant.

7. Élément de friction selon la revendication 5 ou 6, dans lequel la lèvre interne (4) est adaptée, pour le logement de l'élément de maintien d'implant ou de la coiffe radiculaire, à l'élément de maintien d'implant ou à la coiffe radiculaire.

8. Élément de friction selon l'une des revendications précédentes, dans lequel l'évidement central (11) comprend au moins un évidement d'outil (8) pour l'emboîtement d'outil de retrait.

9. Élément de friction selon l'une des revendications précédentes, dans lequel la fente élastique (6) présente une profondeur T de 0,5 à 4,0 mm, de préférence de 0,7 à 2,0 mm et de préférence de 0,8 à 1,5 mm, dans lequel la profondeur T est la distance la plus grande entre le plan tangentiel externe des lèvres interne et externe et le plan tangentiel interne correspondant des lèvres interne et externe et dans lequel le plan tangentiel externe se trouve, par définition, en bas, c'est-à-dire qu'il est orienté loin de la prothèse dentaire, et le plan tangentiel interne se trouve, par définition, en haut, c'est-à-dire orienté vers la prothèse dentaire.

10. Kit avec un élément de friction selon l'une des revendications 1 à 9 et un outil de retrait (12).
